# EUROPEAN PATENT APPLICATION

(11) **EP 4 693 796 A1**
(43) Date of publication of application: **11.02.2026**
(21) Application number: 23929781.5
(22) Date of filing: 18.08.2023
(51) Int. Cl.: H02J 7/00, H01M 10/42, H01M 10/44

(54) **ENERGY STORAGE SYSTEM AND CONTROL METHOD THEREFOR**

(30) Priority: 31.03.2023 CN 202310347700
(71) Applicant: Sungrow Power Supply Co., Ltd., Hefei, Anhui 230088 (CN)
(72) Inventor: GENG, Houlai, Hefei, Anhui 230088 (CN); FAN, Dongdong, Hefei, Anhui 230088 (CN); GE, Jingyu, Hefei, Anhui 230088 (CN); HE, Wei, Hefei, Anhui 230088 (CN); DONG, Puyun, Hefei, Anhui 230088 (CN)
(74) Representative: Zacco Norway AS
(86) International application number: PCT/CN2023/113712
(87) International publication number: WO 2024/198205

(57) **Abstract**

The present application provides an energy storage system and a control method therefor. The control method comprises: acquiring a direct-current bus voltage and a voltage of each battery cluster; after a fault of an abnormal battery cluster is eliminated, controlling an operating battery cluster to switch an operating state, and adjusting a change of the direct-current bus voltage to the voltage of the abnormal battery cluster, to reduce the difference between the direct-current bus voltage and the voltage of the abnormal battery cluster, i.e., reduce a pressure difference on two sides of a switch to which the abnormal battery cluster is connected; and then, when the difference between the direct-current bus voltage and the voltage of the abnormal battery cluster is less than or equal to a first preset difference, controlling the on/off of the switch to which the abnormal battery cluster is connected. Thus, the damage to the switch in the prior art is avoided.

## Description

This application claims the priority to Chinese Patent Application No. 202310347700.7, titled "ENERGY STORAGE SYSTEM AND CONTROL METHOD THEREFOR", filed on March 31, 2023 with the China National Intellectual Property Administration, which is incorporated herein by reference in its entirety.

### FIELD

The present disclosure relates to the technical field of power electronics, and in particular to an energy storage system and a control method thereof

### BACKGROUND

Electrochemical energy storage batteries have advantages such as high energy density, high output voltage, long cycle life, and low environmental pollution, which are widely used in various electronic devices, electric vehicles, and electrochemical energy storage systems.

Due to a low voltage of a single battery cell, multiple cells are typically connected in series to form a battery cluster for practical applications. In addition, due to a low capacity of a single battery cluster, multiple battery clusters are typically connected in parallel via a battery collection panel (BCP) to collect the currents thereof, and then connected to a power conversion system (PCS) for power conversion.

However, in such structure, if a fault in an abnormal battery cluster is eliminated, the abnormal battery cluster can be reconnected in parallel to other operating battery clusters by directly turning on a corresponding switch in the BCP. In this case, the switch may be damaged due to an excessive voltage difference across the switch.

### SUMMARY

An energy storage system and a control method thereof are provided according to the present disclosure, to avoid damage to a switch caused by reconnecting an abnormal battery cluster to the system after a fault is eliminated.

To achieve the above objective, the following technical solutions are provided according to the present disclosure.

In a first aspect, a control method for an energy storage system is provided according to the present disclosure. The energy storage system includes at least two battery clusters, and the at least two battery clusters are connected in parallel to a direct-current bus via respective switches. The control method includes:
acquiring a voltage of the direct-current bus and voltages of the at least two battery clusters;
controlling, after a fault in an abnormal battery cluster is eliminated, an operating battery cluster to switch an operating state, and adjusting the voltage of the direct-current bus towards a voltage of the abnormal battery cluster;
determining whether a difference between the voltage of the direct-current bus and the voltage of the abnormal battery cluster is less than or equal to a first preset difference; and
turning on a switch connected to the abnormal battery cluster, in response to the different between the voltage of the direct-current bus and the voltage of the abnormal battery cluster being less than or equal to the first preset difference.

In an embodiment, the operating state includes a charging state and a discharging state.

The controlling an operating battery cluster to switch an operating state includes: switching the operating state from the charging state to the discharging state, or switching the operating state from the discharging state to the charging state.

In an embodiment, the controlling an operating battery cluster to switch an operating state includes: controlling a power converter connected to the direct-current bus in the energy storage system to change an energy transmission direction.

In an embodiment, after controlling the operating battery cluster to switch the operating state, the control method further includes:
determining whether a duration of switching the operating state of the operating battery cluster reaches a preset duration; and
controlling the operating battery cluster to stop switching the operating state and return to a previous operating state, and maintaining the switch connected to the abnormal battery cluster in an off state, in response to the duration reaching the preset duration and the difference between the voltage of the direct-current bus and the voltage of the abnormal battery cluster being greater than the first preset difference.

In an embodiment, the preset duration is 15 minutes.

In an embodiment, before controlling the operating battery cluster to switch the operating state, the control method further includes:
determining whether the difference between the voltage of the direct-current bus and the voltage of the abnormal battery cluster is greater than a second preset difference, where the second preset difference is greater than the first preset difference;
performing the step of controlling the operating battery cluster to switch the operating state, in response to the difference between the voltage of the direct-current bus and the voltage of the abnormal battery cluster being less than or equal to the second preset difference; and
maintaining the switch connected to the abnormal battery cluster in an off state, in response to the difference between the voltage of the direct-current bus and the voltage of the abnormal battery cluster being greater than the second preset difference.

In an embodiment, after maintaining the switch connected to the abnormal battery cluster in the off state, the control method further includes: turning on the switch connected to the abnormal battery cluster, in response to the difference between the Voltage of the direct-current bus and the voltage of the abnormal battery cluster being less than or equal to the first preset difference.

In an embodiment, multiple energy storage systems are connected in parallel to a multi-machine parallel connection point via respective power converters, the control method comprises: controlling at least one other energy storage system to supplement an energy change generated by controlling the operating battery cluster to switch the operating state at the multi-machine parallel connection point.

In a second aspect, an energy storage system is provided according to the present disclosure. The energy storage system includes a power converter; a battery management system (BMS); at least two battery clusters and switches corresponding to the at least two battery clusters.

The at least two battery clusters are connected in parallel to a direct-current bus via corresponding switches.

A direct-current side of the power converter is connected to the direct-current bus.

The BMS is configured to manage the at least two battery clusters and communicate with a controller within the power converter.

The controller within the power converter is configured to perform the control method for the energy storage system according to any embodiment of the above first aspect.

In an embodiment, a voltage of the direct-current bus is directly detected by the controller within the power converter.

Voltages of the at least two battery clusters are directly detected by the controller within the power converter, or detected by the BMS and transmitted to the power converter.

In an embodiment, the controller within the power converter controls the switches to be turned on or off by the BMS.

In an embodiment, the at least two battery clusters are arranged in a battery box.

In an embodiment, the switches are arranged in a battery collection panel (BCP).

In an embodiment, the BCP further includes: multiple fusing apparatuses respectively connected in series to the switches, or a shared fusing apparatus connected to the switches connected in parallel.

In an embodiment, the power converter is a power conversion system (PCS), and an alternating-current side of the power converter is connected to a grid connection point.

A control method for an energy storage system is provided according to the present disclosure. A voltage of the direct-current bus and voltages of battery clusters are acquired. After a fault in an abnormal battery cluster is eliminated, an operating battery cluster is controlled to switch an operating state, and the voltage of the direct-current bus is adjusted towards a voltage of the abnormal battery cluster, thereby reducing a voltage difference therebetween, that is, reducing the voltage difference across a switch connected to the abnormal battery cluster. Subsequently, when a difference between the voltage of the direct-current bus and the voltage of the abnormal battery cluster is less than or equal to a first preset difference, the switch connected to the abnormal battery cluster is turned on, thereby avoiding damage to the switch in the relational technology.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only the embodiments of the present disclosure, and other drawings may be obtained by those skilled in the art from the drawings without any creative work.
FIG. 1 is a schematic structural diagram ofan energy storage system according to an embodiment of the present disclosure;
FIG. 2 is a flowchart of a control method for an energy storage system according to an embodiment of the present disclosure;
FIG. 3 is a schematic structural diagram of an energy storage system when an abnormal battery cluster is disconnected according to an embodiment of the present disclosure;
FIG. 4 is a flowchart of a control method for an energy storage system according to another embodiment of the present disclosure;
FIG. 5 is a flowchart of a control method for an energy storage system according to another embodiment of the present disclosure; and
FIG. 6 is a schematic structural diagram of an energy storage system during multi-machine parallel operation according to an embodiment of the present disclosure.

### DETAILED DESCRIPTION

The technical solutions according to the embodiments of the present disclosure will be described clearly and completely as follows in conjunction with the drawings in the embodiments of the present disclosure. It is apparent that the described embodiments are only some of the embodiments according to the present disclosure, rather than all the embodiments. All other embodiments obtained by those skilled in the art based on the embodiments in the present disclosure without any creative work fall within the protection scope of the present disclosure.

In the present disclosure, the terms "include", "comprise" or any other variants thereof are intended to be non-exclusive. Therefore, a process, method, article or device including a series of elements include not only these elements but also other elements that are not clearly enumerated, or further include elements inherent in the process, method, article or device. Unless expressively limited, the statement "including a..." does not exclude the case that other similar elements may exist in the process, method, article or device including the series of elements.

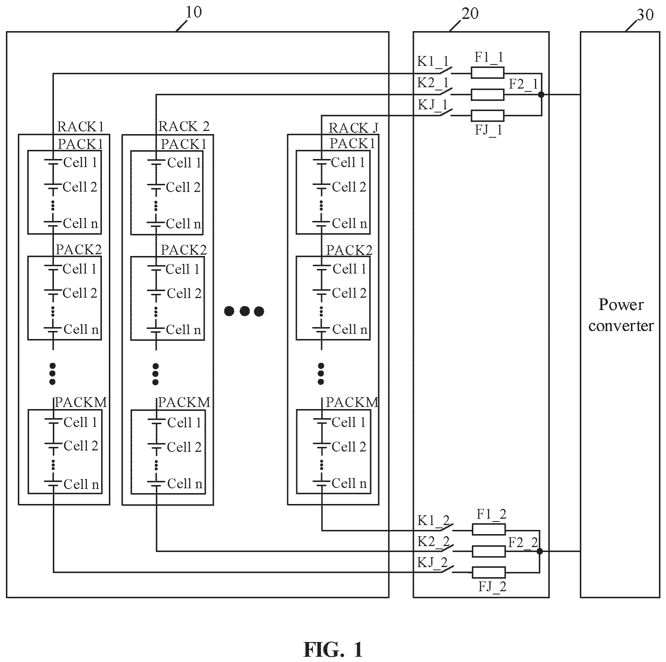

Referring to FIG. 1, an energy storage system includes a power converter 30, at least two battery clusters (RACK1 to RACKJ as shown in FIG. 1) and switches corresponding to the respective battery clusters. Each of the at least two battery clusters includes multiple battery packs connected in series, such as, PACK1 to PACKM as shown in FIG. 1. Each of the multiple battery packs includes multiple battery cells connected in series, such as, Cell1 to Celln as shown in FIG. 1. The switches are double-pole switches arranged in positive electrodes and negative electrodes of respective power transmission branches, such as K1_1 and K1_2, K2_1 and K2_2, ..., and KJ_1 and KJ_2 as shown in FIG. 1.

The battery clusters are connected in parallel to a direct-current bus via corresponding switches. In practical applications, the battery clusters may be arranged in a battery box 10 shown in FIG. 1. The switches may be arranged in a battery collection panel (BCP) 20 shown in FIG. 1, or may be arranged in positive and negative power transmission branches (not illustrated) corresponding to the respective battery clusters in the battery box 10. The arrangement of the switches depends on the specific application environment, which will not be limited herein. Moreover, the BCP 20 may further include multiple fusing apparatuses connected in series to the respective switches, such as, fuses F1_1 and F1_2, F2_1 and F2_2, ..., and FJ_1 and FJ_2 as shown in FIG. 1. Alternatively, the BCP 20 may further include a shared positive and negative fusing apparatus (not illustrated) which is connected to the switches connected in parallel. The BCP 20 is not limited herein, which depends on the specific application environment.

A direct-current side of the power converter 30 is connected to the direct-current bus. The power converter 30 may be a power conversion system (PCS), and an alternating-current side of the power converter is connected to a grid connection point. The power converter 30 may further be a DC/DC converter, and the other direct-current side of the power converter is connected to a photovoltaic generation system. The power converter 30 is not limited herein, which depends on the specific application environment. A case that the power converter 30 is a PCS is taken as an example. The PCS is specifically configured to achieve power conversion between the parallel-connected battery clusters and the grid connection point, for example, charging the battery clusters with power from the grid connection point, or discharging power from the battery clusters to the grid connection point.

Taking a structure shown in FIG. 1 as an example, each battery cluster in the battery box is composed of multiple battery cells connected in series. Multiple battery clusters are all connected to the BCP 20. The BCP 20 collects the currents of multiple battery clusters and connects the multiple battery clusters to the power converter 30. The BCP 20 includes components such as switches and fuses.

Initially, all battery clusters have almost the same electric quantity. When the system is not operating, all switches turn on to enable system to operate normally.

In the operation process of the system, a battery cluster RACKi (1≤i≤J) becomes an abnormal battery cluster due to loose wiring, which causes excessively high cell temperature or excessively low cell voltage. In this case, corresponding switches Ki_1 and Ki_2 are turn off. After a period of time, a fault in the abnormal battery cluster RACKi is eliminated, and the abnormal battery cluster RACKi is to be reconnected to the system to operate normally with other battery clusters in the operating state, that is, the operating battery clusters. In such case, the electric quantity of the abnormal battery cluster RACKi is inconsistent with that of the other operating battery cluster, and a voltage difference across the switch Ki_1 and a voltage difference across the switch Ki_2 are excessively high. If the switches Ki_1 and Ki_2 are controlled to be turned on forcibly, the switches Ki_1 and Ki_2 or the fuses Fi_1 and Fi_2 may be damaged. Therefore, a control method for an energy storage system is provided according to the present disclosure, to avoid damage to switches and fuses caused by reconnecting an abnormal battery cluster to the system after a fault is eliminated.

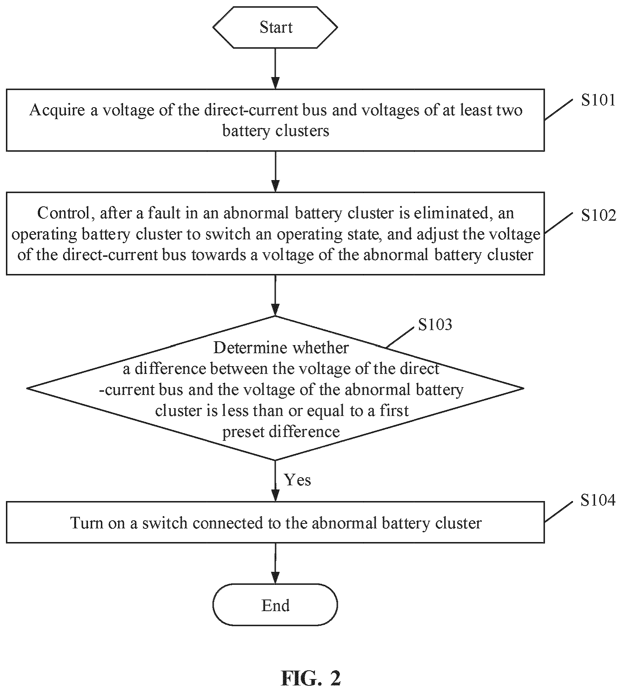

Referring to FIG. 2, the control method for the energy storage system includes the following steps S101 to S104.

In S101, a voltage of a direct-current bus and voltages of at least two battery clusters are acquired.

The voltage Vbus of the direct-current bus is a voltage on the direct-current bus.

The voltage Vbus of the direct-current bus may be directly detected by a controller within the power converter. The voltages of the at least two battery clusters may be directly detected by the controller within the power converter. Alternatively, the voltages of the at least two battery clusters may be detected by a battery management system (BMS) and transmitted to the controller within the power converter via communication. The method for detecting the voltage depends on the specific application environment, which is within the protection scope of the present disclosure.

In S102, after a fault in an abnormal battery cluster is eliminated, an operating battery cluster is controlled to switch an operating state, and the voltage of the direct-current bus is adjusted towards a voltage of the abnormal battery cluster.

After the fault in the abnormal battery cluster RACKi is eliminated, the switches Ki_1 and Ki_2 corresponding to the abnormal battery cluster RACKi are to be turned on. To reduce the voltage difference across the switch Ki, that is, to reduce a difference between the voltage Vracki of the abnormal battery cluster RACKi and the voltage Vbus of the direct-current bus, the voltage Vbus of the direct-current bus may be adjusted to approach the voltage Vracki of the abnormal battery cluster RACKi. The process of adjusting the voltage Vbus of the direct-current bus may include adjusting the electric quantity of the operating battery cluster to be equal to the electric quantity of the abnormal battery cluster RACKi when disconnected due to the fault. Thus, the operating battery cluster is controlled to exit the current operating state and switch to a reverse operating state, to compensate for the change of the electric quantity that occurs in the period when the abnormal battery cluster RACKi is disconnected. In this way, the electric quantity of the operating battery cluster may be equal to the electric quantity of the abnormal battery cluster RACKi when disconnected.

In S103, whether a difference between the voltage of the direct-current bus and the voltage of the abnormal battery cluster is less than or equal to a first preset difference is determined.

The specific value of the first preset difference may be determined based on the actual application environment, which should ensure that the voltage differences across the switches Ki_1 and Ki_2 do not damage to the switches and fuses when the switches Ki_1 and Ki_2 are turned on. The value of the first preset difference will not be limited herein.

If the difference between the voltage of the direct-current bus and the voltage of the abnormal battery cluster is less than or equal to the first preset difference, S104 is executed.

In S104, a switch connected to the abnormal battery cluster is controlled to be turned on.

In the control method for the energy storage system according to the embodiment, after the fault in the abnormal battery cluster is eliminated, the operating battery cluster is controlled to switch the operating state, and the voltage of the direct-current bus is adjusted to approach the voltage of the abnormal battery cluster, thereby reducing the voltage difference between the voltage of the direct-current bus and the voltage of the abnormal battery cluster, that is, reducing the voltage difference across the switch connected to the abnormal battery cluster. When the voltage difference is less than or equal to the first preset difference, the switch connected to the abnormal battery cluster is turned on, avoiding damage to the corresponding components in the conventional technology, facilitating the rapid reconnection of the abnormal battery cluster to the system, simplifying maintenance, and improving user experience.

It should be noted that after the fault in the abnormal battery cluster RACKi is eliminated, the electric quantity of the abnormal battery cluster RACKi differs from the electric quantity of the other operating battery cluster. Waiting for the electric quantity of the abnormal battery cluster RACKi to be equal to the electric quantity of the other operating battery cluster requires a long waiting time. If the system is shut down for recharging to regulate the electric quantity of the abnormal battery cluster RACKi to the electric quantity of the operating battery cluster before restarting, the above process takes a long time and affects user usage. A consistent voltage at two terminals of the corresponding switch is achieved by an active current control according to the embodiment, thereby avoiding damage to components caused by the large voltage difference and reducing a waiting time. Moreover, the disconnected and fault-eliminated abnormal battery cluster may be reconnected to the system to operate with the operating battery cluster during the system operation without shutting down and restarting, shortening time consumption and avoiding impact on user usage.

Based on the previous embodiment, S102 in the control method for the energy storage system will be explained in details according to an embodiment of the present disclosure. For example, the operating state specifically includes a charging state and a discharging state. In such case, the process of switching the operating state in S102 specifically includes: switching the operating state from the charging state to the discharging state, or switching the operating state from the discharging state to the charging state.

In practical applications, if the current operating state of the operating battery cluster is the charging state, the switching the operating state specifically includes switching the operating state from the charging state to the discharging state. If the current operating state of the operating battery cluster is the discharging state, the switching the operating state specifically includes switching the operating state from the discharging state to the charging state.

Moreover, the switching operation may specifically be performed by the power converter 30 shown in FIG. 1. That is, the controlling the operating battery cluster to switch the operating state in S102 specifically includes: controlling the power converter connected to the direct-current bus in the energy storage system to change an energy transmission direction.

In an embodiment, if the energy transmission direction of the power converter 30 is from an external component to the operating battery cluster for charging, the energy transmission direction is adjusted to discharge from the operating battery cluster to the external component. If the energy transmission direction of the power converter 30 is from the operating battery cluster to the external component for discharging, the energy transmission direction is adjusted to charge from the external component to the operating battery cluster.

Moreover, in the process of adjusting the energy transmission direction of the power converter 30, the current energy transmission is first paused and then the direction is switched to execute the energy transmission. For example, if the power converter is currently charging the operating battery cluster, the charging operation is first paused and then the operating battery cluster discharges. The other case will not be repeated herein.

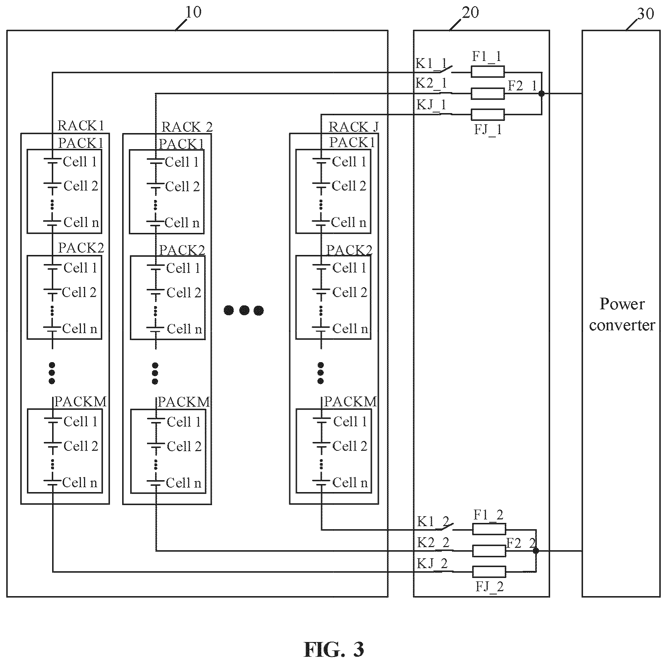

A case that the fault occurs in the first battery cluster RACK1 shown in FIG. 1 and the first battery cluster RACK1 is determined as an abnormal battery cluster is taken as an example. The fault causes the switch K1 (including K1_1 and K1_2 shown in FIG. 1) to be turned off, and other switches K2 (including K2_1 and K2_2 shown in FIG. 1) to KJ (including KJ_1 and KJ_2 shown in FIG. 1) is in the on state, as shown in FIG. 3. In such case, the control method specifically includes the following steps 1 to 3.

In step 1, the voltages Vrack1 to VrackJ of the battery clusters and the voltage Vbus of the direct-current bus are detected in real time.

In step 2, when the energy storage system is in the charging state, Vbus is typically greater than Vrack1 when the fault in the abnormal battery cluster RACK1 is eliminated. In such case, the energy storage system is forced into the discharging state to make the voltage Vbus of the direct-current bus close to the voltage Vrack1 of the abnormal battery cluster RACK1, and then the switch K1 is turned on to achieve normal operation of the switch K1.

In step 3, when the energy storage system is in the discharging state, Vbus is typically less than Vrack1 when the fault in the abnormal battery cluster RACK1 is eliminated. In such case, the energy storage system is forced into the charging state to make the voltage Vbus of the direct-current bus close to the voltage Vrack1 of the abnormal battery cluster RACK1, and then the switch K1 is turned on to achieve normal operation of the switch K1.

It can be seen from the above content that according to the embodiments of the present disclosure, the disconnected and fault-eliminated abnormal battery cluster can be actively and quickly reconnected to the system to participate in power control.

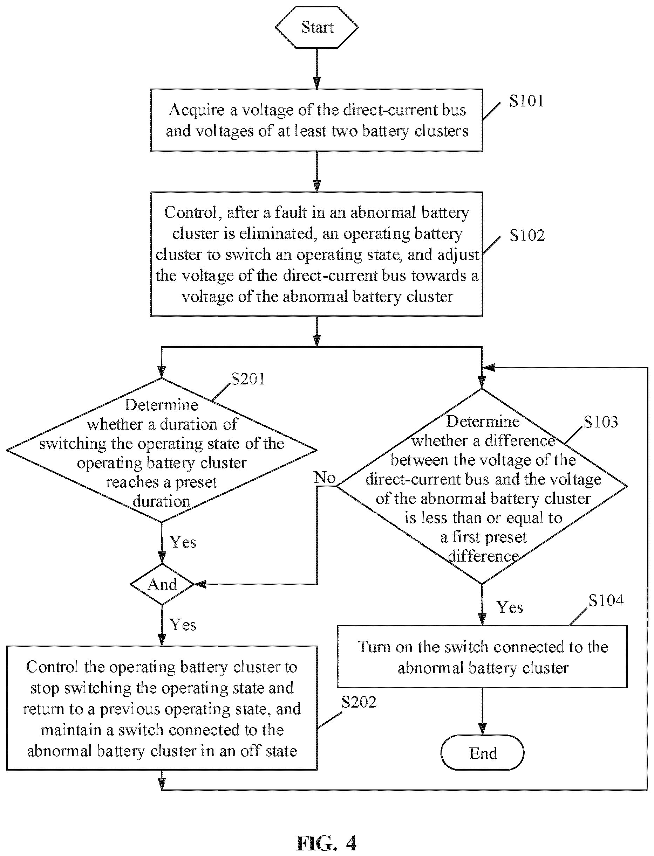

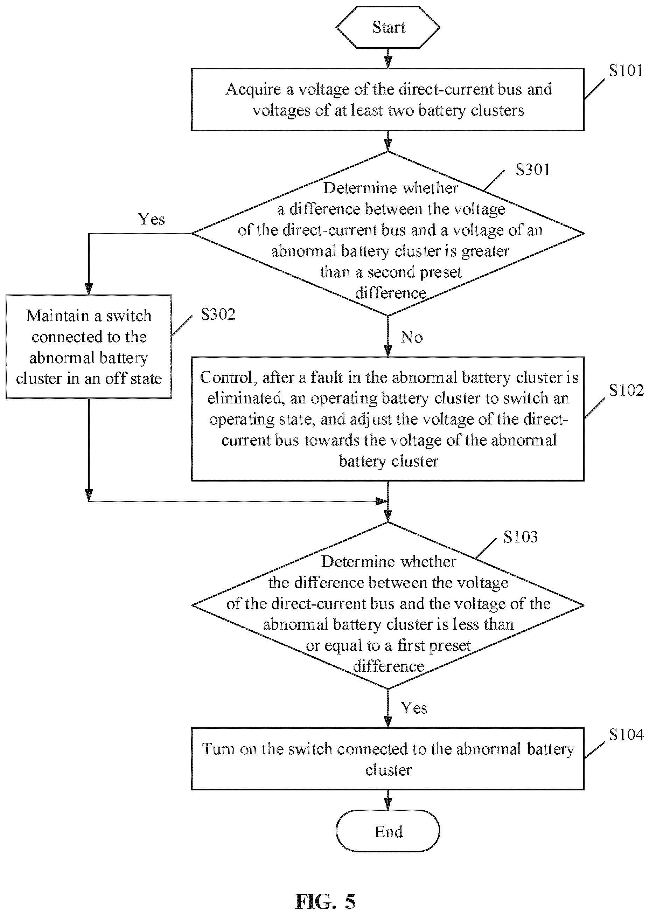

It should be noted that after the fault in the abnormal battery cluster is eliminated, if an energy difference between the abnormal battery cluster and the other operating battery cluster is excessively large, it is difficult to make Vbus close to Vrack1 even if the charging/discharging action is maintained for a certain time period. In such case, other operations may be performed. Therefore, based on the above embodiments, a control method is provided according to another embodiment of the present disclosure, as shown in FIG. 4 or FIG. 5.

Referring to FIG. 4, after S102, the control method further includes the following steps S201 to S202.

In S201, whether a duration of switching the operating state of the operating battery cluster reaches a preset duration is determined.

In practical applications, the preset duration is the aforementioned certain time period, which may specifically be set to 15 minutes. However, the preset duration is not limited to this, which will be determined based on the specific application environment.

If the duration reaches the preset duration and the difference between the voltage of the direct-current bus and the voltage of the abnormal battery cluster is greater than the first preset difference, S202 is executed.

In S202, the operating battery cluster is controlled to stop switching the operating state and return to a previous operating state, and the switch connected to the abnormal battery cluster is controlled to maintain in the off state.

That is, the duration of S102 cannot exceed the preset duration. If the duration exceeds the preset duration and the difference between the voltage of the direct-current bus and the voltage of the abnormal battery cluster is still greater than the first preset difference, the operating battery cluster is controlled to stop switching the operating state and return to the previous operating state, to avoid affecting an output load and reduce the possibility of user perception.

Alternatively, referring to FIG. 5, before S102, the control method further includes the following steps S301 to S302.

In S301, whether the difference between the voltage of the direct-current bus and the voltage of the abnormal battery cluster is greater than a second preset difference is determined.

The second preset difference is greater than the first preset difference. The specific value of the second preset difference depends on the application environment, as long as the value can indicate that the voltage difference across the switch connected to the abnormal battery cluster is excessively large and fails to be reduced to less than or equal to the first preset difference by charging/discharging actions for a certain time period. The value of the second preset difference is not limited herein.

If the difference between the voltage of the direct-current bus and the voltage of the abnormal battery cluster is less than or equal to the second preset difference, S102 is executed. If the difference between the voltage of the direct-current bus and the voltage of the abnormal battery cluster is greater than the second preset difference, S302 is executed, instead of S102.

In S302, the switch connected to the abnormal battery cluster is controlled to maintain in the off state.

The difference between the two solutions in FIG. 4 and FIG. 5 is as follows. In the solution in FIG. 4, after the operation of switching the operating state of the operating battery cluster is executed for a period of time, it is found that the difference between the voltage of the direct-current bus and the voltage of the abnormal battery cluster fails to be reduced to less than or equal to the first preset difference, and the operation of switching the operating state is stopped. In the solution in FIG. 5, before switching the operating state of the operating battery cluster, it is predetermined whether the difference between the voltage of the direct-current bus and the voltage of the abnormal battery cluster may be reduced to less than or equal to the first preset difference without affecting the system's external performance. If the difference between the voltage of the direct-current bus and the voltage of the abnormal battery cluster cannot be reduced to less than or equal to the first preset difference, the operation of switching the operating state is stopped. An unnecessary reverse operation for the operating battery cluster is avoided by the solution in FIG. 5.

Moreover, based on the two solutions in FIG. 4 and FIG. 5, after maintaining the switch connected to the abnormal battery cluster in the off state, the control method further includes: in response to the difference between the voltage of the direct-current bus and the voltage of the abnormal battery cluster being less than or equal to the first preset difference, control the switch connected to the abnormal battery cluster to be turned on. That is, after S202 in the solution in FIG. 4 and after S302 in the solution in FIG. 5, S103 is performed to control the abnormal battery cluster to reconnect to the system in response to the energy or voltage of the abnormal battery cluster close to the energy or voltage of the operating battery cluster.

It should be noted that in practical applications, a case of multi-machine parallel operation may exist. That is, multiple energy storage systems are connected in parallel to a multi-machine parallel connection point via their respective power converters. When the power converter is the PCS, the multi-machine parallel connection point refers to the grid connection point. When the power converter is a DC/DC converter, the multi-machine parallel connection point refers to a connection point between each energy storage system and the photovoltaic generation system. In such case, according to the embodiments of the present disclosure, an energy change at the multi-machine parallel connection point caused by controlling the operating battery cluster to switch the operating state in S102 of the control method is supplemented by at least one of other energy storage systems.

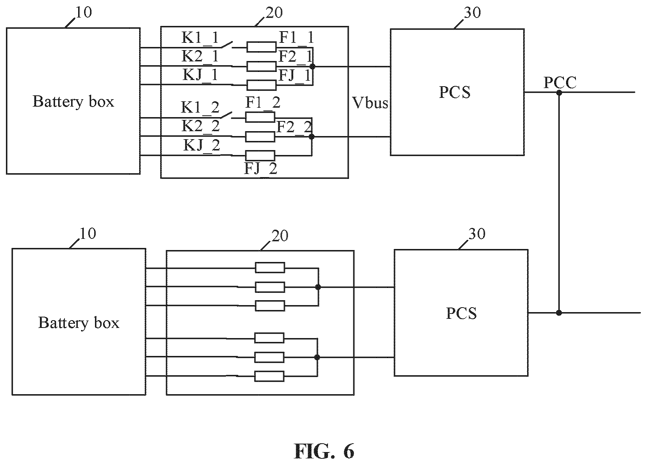

In FIG. 6, a case that the power converter is a PCS is taken as an example. Two energy storage systems are connected in parallel at the grid connection point PCC. It is assumed that a fault occurs in the first battery cluster RACK1 in the first energy storage system and the first battery cluster RACK1 is determined as the abnormal battery cluster. The fault may cause the switch K1 (including K1_1 and K1_2 shown in FIG. 6) to be turned off Other switches K2 (including K2_1 and K2_2 shown in FIG. 6) to KJ (including KJ_1 and KJ_2 shown in FIG. 6) are in the on state, and all battery clusters in the second energy storage system are normal and all switches are in the on state. In such case, the control method specifically includes the following steps 1 to 3.

In step 1, the voltages Vrack1 to VrackJ of the battery clusters in the first energy storage system and the voltage Vbus of the direct-current bus are detected in real time.

In step 2, when the first energy storage system is in the charging state, Vbus is typically greater than Vrack1 when the fault in the abnormal battery cluster RACK1 is eliminated. In such case, the first energy storage system is forced into the discharging state, and the second energy storage system is controlled to supplement the charging energy of the first energy storage system to reduce user perception. When the voltage Vbus of the direct-current bus approaches the voltage Vrack1 of the abnormal battery cluster RACK1, the switch K1 is turned on to achieve normal operation of the switch K1.

In step 3, when the first energy storage system is in the discharging state, Vbus is typically less than Vrack1 when the fault in the abnormal battery cluster RACK1 is eliminated. In such case, the first energy storage system is forced into the charging state, and the second energy storage system is controlled to supplement the charging energy of the first energy storage system to reduce user perception. When the voltage bus of the direct-current Vbus approaches the voltage Vrack1 of the abnormal battery cluster RACK1, the switch K1 is turned on to achieve normal operation of the switch K1.

According to the solutions in the embodiments of the present disclosure, the disconnected and fault-eliminated abnormal battery cluster can be actively and quickly reconnected to the system to participate in power control. Moreover, after the fault in the abnormal battery cluster is eliminated, if an energy difference between the abnormal battery cluster and the other operating battery cluster is excessively large, it is difficult to make Vbus close to Vrack1 even if the second energy storage system or more systems supplement the charging energy. The solution in FIG. 4 may be adopted to stop switching the operating state in response to determining this situation, or the solution in FIG. 5 may be adopted to stop switching the operating state in response to predetermining this situation, to avoid affecting an output load. The abnormal battery cluster is reconnected to the energy storage system in response to the energy or voltages of the abnormal battery cluster close to the energy or voltages of the operating battery cluster.

Other steps and principles of the control method may be referred to the above embodiments, which will not be repeated herein.

An energy storage system is provided according to another embodiment of the present disclosure. Referring to FIG. 1, the energy storage system includes a power converter 30, a BMS (not illustrated), and at least two battery clusters (RACK1 to RACKJ as shown in FIG. 1) and switches corresponding to the respective battery clusters.

Each of the at least two battery clusters includes multiple battery packs connected in series, such as PACK1 to PACKM as shown in FIG. 1. Each of the multiple battery packs includes multiple battery cells connected in series, such as, Cell1 to Celln as shown in FIG. 1. In practical applications, the structure configurations of the battery clusters RACK1 to RACKJ may not be exactly the same, as long as the battery clusters have the same voltage.

The switches are double-pole switches arranged in positive electrodes and negative electrodes of respective power transmission branches, such as, K1_1 and K1_2, K2_1 and K2_2, ..., and KJ_1 and KJ_2 as shown in FIG. 1.

The battery clusters are connected in parallel to a direct-current bus via the respective switches. In practical applications, the battery clusters may be arranged in a battery box 10 shown in FIG. 1. The switches may be arranged in the BCP 20 shown in FIG. 1, or may be arranged in positive and negative power transmission branches corresponding to the respective battery clusters in the battery box 10 The arrangement of the switches depends on the specific application environment, which will not be limited herein. Moreover, the BCP 20 may further include multiple fusing apparatuses connected in series to the respective switches, such as, positive and negative fuses F1_1 and F1_2, F2_1 and F2_2, ..., and FJ_1 and FJ_2 as shown in FIG. 1. Alternatively, the BCP 20 may include a shared positive and negative fusing apparatus (not illustrated) which is connected to the switches connected in parallel. The BCP 20 is not limited herein, which depends on the specific application environment.

The voltage on the direct-current bus is the voltage Vbus of the direct-current bus. A direct-current side of the power converter 30 is connected to the direct-current bus. The power converter 30 may be a PCS, and an alternating-current side of the power converter is connected to a grid connection point. Alternatively, the power converter 30 may be a DC/DC converter, and the other direct-current side of the power converter is connected to a photovoltaic generation system. The power converter 30 is not limited herein, which depends on the specific application environment. When the power converter 30is the PCS, the PCS is specifically configured to achieve power conversion between the parallel-connected battery clusters and the grid connection point, for example, charging the battery clusters with power from the grid connection point, or discharging power from the battery clusters to the grid connection point.

The BMS is configured to manage the respective battery clusters and communicate with the power converter 30. A controller within the power converter 30 is configured to perform the control method for the energy storage system as described in any of the foregoing embodiments. The specific process and principles of the control method may be referred to the above embodiments and will not be repeated here.

In practical applications, the controller within the power converter 30 controls the switches to be turned on or off by the BMS.

The BMS may specifically include a battery system management unit (SMU), a cell management unit (CMU) for each battery cluster, and at least one battery management unit (BMU) within each battery pack. Each of the at least one BMU communicates with the corresponding CMU, and each CMU communicates with the SMU. The SMU is arranged in the BCP 20 and communicates with the controller within the power converter 30. When the switches are arranged in the BCP 20 (as shown in FIG. 1), the controller within the power converter 30 may control the switches by the SMU. When the switches are arranged in the battery box 10, the controller within the power converter 30 may control the switches respectively by the SMU and the corresponding CMUs.

In addition, in the process of performing the control method, the voltage Vbus of the direct-current bus is directly detected by the controller within the power converter 30. The voltages of the at least two battery clusters are directly detected by the controller within the power converter 30. Alternatively, the voltages of the at least two battery clusters may be detected by the BMS and transmitted to the controller within the power converter 30 via communication. Specifically, the voltages of the at least two battery clusters may be detected by the CMUs and transmitted to the controller within the power converter 30 through the SMU. The method for detecting the voltage depends on the specific application environment, which is within the protection scope of the present disclosure.

The energy storage system according to the embodiments of the present disclosure may be applied as a standalone unit or multi energy storage systems may be applied in a parallel connection manner. By adopting the aforementioned control method, the fault-eliminated abnormal battery cluster may be actively and quickly reconnected to the system, simplifying maintenance and enhancing user experience.

The same or similar parts among the embodiments in this specification may be referred to each other, and each of the embodiments emphasizes differences from other embodiments. In particular, the system or system embodiment is basically similar to the method embodiment, and therefore is described relatively briefly. For relevant details, reference can be made to the corresponding description of the method embodiment. The system and system embodiments described above are only illustrative, in which the units described as separate components may or may not be physically separated, and the components shown as units may or may not be physical units, that is, may be arranged in one place, or distributed over multiple network elements. Some or all of the modules may be selected as needed to achieve the objective of the solution of the embodiments. Those skilled in the art can understand and implement the solution without any creative effort.

Those skilled in the art may further realize that the units and algorithm steps of each example described in conjunction with the embodiments disclosed herein can be implemented by electronic hardware, computer software, or a combination of both. In order to clearly illustrate the interchangeability of hardware and software, the modules and steps of each example have been described in general terms of functionality in the above description. Whether these functions are performed in hardware or software depends on the specific application and design constraints of the technical solution. Those skilled in the art may implement the described functionality in various manners for each specific application, while such implementations should not be considered to be beyond the scope of the present disclosure.

Based on the above description of the disclosed embodiments, the features described in the embodiments in this specification may be replaced or combined with each other, so that those skilled in the art can implement or use the present disclosure. Various modifications to these embodiments will be apparent by those skilled in the art, and the generic principles defined herein may be implemented in other embodiments without departing from the spirit or scope of the present disclosure. Therefore, the present disclosure is not limited to the embodiments described herein, but should be in accordance with the broadest scope consistent with the principle and novel features disclosed herein.

## Claims

1. A control method for an energy storage system, **characterized in that**, the energy storage system comprises at least two battery clusters, and the at least two battery clusters are connected in parallel to a direct-current bus via respective switches; and the control method comprises:
acquiring a voltage of the direct-current bus and voltages of the at least two battery clusters;
controlling, after a fault in an abnormal battery cluster is eliminated, an operating battery cluster to switch an operating state, and adjusting the voltage ofthe direct-current bus towards a voltage of the abnormal battery cluster;
determining whether a difference between the voltage of the direct-current bus and the voltage of the abnormal battery cluster is less than or equal to a first preset difference; and
turning on a switch connected to the abnormal battery cluster, in response to the different between the voltage of the direct-current bus and the voltage of the abnormal battery cluster being less than or equal to the first preset difference.

2. The control method for the energy storage system according to claim 1, wherein the operating state comprises a charging state and a discharging state; and
the controlling an operating battery cluster to switch an operating state comprises:
switching the operating state from the charging state to the discharging state, or
switching the operating state from the discharging state to the charging state.

3. The control method for the energy storage system according to claim 1, wherein the controlling an operating battery cluster to switch an operating state comprises:
controlling a power converter connected to the direct-current bus in the energy storage system to change an energy transmission direction.

4. The control method for the energy storage system according to claim 1, wherein after controlling the operating battery cluster to switch the operating state, the control method further comprises:
determining whether a duration of switching the operating state of the operating battery cluster reaches a preset duration; and
controlling the operating battery cluster to stop switching the operating state and return to a previous operating state, and maintaining the switch connected to the abnormal battery cluster in an off state, in response to the duration reaching the preset duration and the difference between the voltage of the direct-current bus and the voltage of the abnormal battery cluster being greater than the first preset difference.

5. The control method for the energy storage system according to claim 4, wherein the preset duration is 15 minutes.

6. The control method for the energy storage system according to claim 1, wherein before controlling the operating battery cluster to switch the operating state, the control method further comprises:
determining whether the difference between the voltage of the direct-current bus and the voltage of the abnormal battery cluster is greater than a second preset difference, wherein the second preset difference is greater than the first preset difference;
performing the step of controlling the operating battery cluster to switch the operating state, in response to the difference between the voltage of the direct-current bus and the voltage of the abnormal battery cluster being less than or equal to the second preset difference; and
maintaining the switch connected to the abnormal battery cluster in an off state, in response to the difference between the voltage of the direct-current bus and the voltage of the abnormal battery cluster being greater than the second preset difference.

7. The control method for the energy storage system according to any one of claims 4 to 6, wherein after maintaining the switch connected to the abnormal battery cluster in the off state, the control method further comprises:
turning on the switch connected to the abnormal battery cluster, in response to the difference between the voltage of the direct-current bus and the voltage of the abnormal battery cluster being less than or equal to the first preset difference.

8. The control method for the energy storage system according to any one of claims 1 to 6, wherein a plurality of energy storage systems are connected in parallel to a multi-machine parallel connection point via respective power converters, and
the control method comprises:
controlling at least one other energy storage system to supplement an energy change generated by controlling the operating battery cluster to switch the operating state at the multi-machine parallel connection point.

9. An energy storage system, **characterized by**, comprising:
a power converter;
a battery management system, BMS; and
at least two battery clusters and switches corresponding to the respective battery clusters, wherein
the at least two battery clusters are connected in parallel to a direct-current bus via corresponding switches;
a direct-current side of the power converter is connected to the direct-current bus;
the BMS is configured to manage the at least two battery clusters and communicate with a controller within the power converter; and
the controller within the power converter is configured to perform the control method for the energy storage system according to any one of claims 1 to 8.

10. The energy storage system according to claim 9, wherein the voltage of the direct-current bus is directly detected by the controller within the power converter; and
the voltages of the at least two battery clusters are directly detected by the controller within the power converter, or detected by the BMS and transmitted to the power converter.

11. The energy storage system according to claim 9, wherein the controller within the power converter controls the switches to be turned on or off by the BMS.

12. The energy storage system according to any one of claims 9 to 11, wherein the at least two battery clusters are arranged in a battery box.

13. The energy storage system according to any one of claims 9 to 11, wherein the switches are arranged in a battery collection panel, BCP.

14. The energy storage system according to claim 13, wherein the BCP further comprises: a plurality of fusing apparatuses respectively connected in series to the switches, or a shared fusing apparatus which is connected to the switches connected in parallel.

15. The energy storage system according to any one of claims 9 to 11, wherein the power converter is a power conversion system, PCS, and an alternating-current side of the power converter is connected to a grid connection point.
